# FASCICULE DE BREVET EUROPEEN

(11) **EP 0 997 835 B1**
(45) Date de publication et mention de la délivrance du brevet: **04.10.2006**
(21) Numéro de dépôt: 99402700.1
(22) Date de dépôt: 29.10.1999
(51) Int. Cl.: G06K 7/00

(54) **Procédé d'identification de cartes électroniques**
Verfahren zur Identifizierung von Chipkarten
Method for identifying chip cards

(30) Priorité: 30.10.1998 FR 9813684
(43) Date de publication de la demande: 03.05.2000
(73) Titulaire: STMicroelectronics S.A., 92120 Montrouge (FR)
(72) Inventeur: Gaultier, Jean-Marie, 75116 Paris (FR)
(74) Mandataire: Ballot, Paul Denis Jacques

(56) Documents cités:
- WO-A-98/32237
- FR-A- 2 758 027
- US-A- 5 541 928

## Description

La présente invention se rapporte à un perfectionnement aux procédés d'identification de cartes électroniques, du type dans lesquels les cartes électroniques répondent à un message d'interrogation, émis par une unité d'interrogation, par l'émission d'un message de réponse dans une fenêtre temporelle («Time Slot», en anglais) particulière au sein d'une séquence de n fenêtres temporelles (où n est un nombre entier supérieur ou égal à deux).

Un tel procédé est mis en oeuvre dans un système comprenant une unité d'interrogation fixe, pouvant dialoguer, c'est-à-dire échanger des messages, avec une pluralité de cartes électroniques mobiles par rapport à l'unité d'interrogation.

Au sens de la présente invention, une carte électronique peut notamment être un module électronique, un badge ou une carte à puce, et être portée par un individu, un véhicule, un appareil, du bétail, etc... L'unité d'interrogation est par exemple comprise dans une station de base, une borne de contrôle d'accès, une borne de péage à la volée, etc...

En variante, l'unité d'interrogation est mobile et les cartes électroniques sont fixes. En variante encore, l'unité d'interrogation et les cartes électroniques sont mobiles.

Le dialogue entre l'unité d'interrogation d'une part et les cartes électroniques d'autre part est un dialogue de type sans contact. Par exemple, les messages sont émis par onde porteuse électromagnétique radiofréquence ou hyperfréquence. Le canal de transmission est ainsi constitué par l'espace ambiant. Ce canal de transmission est unique. Il doit donc être partagé dans le temps selon un protocole de communication entre l'unité et les cartes afin notamment d'éviter les collisions entre les messages destinés à, ou en provenance de cartes électroniques différentes.

Ce protocole est de type maître/esclave. En effet, chaque échange de message entre l'unité d'interrogation (le maître) et une carte déterminée (l'esclave) est initié par l'unité d'interrogation. Les cartes sont maintenues dans un état particulier, dit état de sommeil («Stand-by State», en anglais), jusqu'à être réveillées par un message de réveil émis par l'unité. Celle-ci émet alors un message de commande. Lorsque la commande est effectuée, l'unité émet un message de mise en sommeil de la carte, qui a pour effet de ramener la carte dans l'état de sommeil. De cette manière, en fonctionnement normal, une seule carte au plus est réveillée en même temps pour recevoir un message de commande. Les autres cartes présentes ne sont pas concernées par ce message de commande.

A chaque carte électronique est attribué de manière univoque un numéro d'identification. Dit autrement, un numéro d'identification unique est associé à chaque carte électronique. Cette attribution peut se faire de manière statique ou dynamique. Dans le premier cas, chaque carte possède un numéro d'identification qui lui est attribué une fois pour toutes, par exemple lors de sa fabrication. Dans le second cas, un numéro d'identification généré aléatoirement est attribué à chaque carte électronique lorsqu'elle entre dans la zone de portée des messages échangés.

Or, du fait de la mobilité des cartes électroniques, et/ou de sa propre mobilité, l'unité d'interrogation ignore a priori si des cartes électroniques se trouvent dans la zone de portée des messages échangés. Le cas échéant, elle ignore combien de cartes sont présentes et surtout, elle ignore quelles sont les cartes présentes.

C'est pourquoi, on a proposé dans l'état de la technique des procédés d'identification par l'unité d'interrogation des cartes électroniques présentes dans la zone de portée des messages échangés. Dans la suite, cette zone est dénommée zone d'investigation, dans la mesure où il s'agit de la zone à l'intérieur de laquelle le procédé auquel se rapporte l'invention consiste à identifier les cartes électroniques présentes. Comme on l'aura compris, identifier une carte électronique présente revient à déterminer son numéro d'identification.

Ces procédés connus dans l'état de la technique fonctionnent tous sur le même principe. Un message d'interrogation est émis par l'unité d'interrogation à destination de toutes les cartes présentes dans la zone d'investigation. Toutes les cartes présentes, ou certaines seulement qui sont autorisées à répondre, émettent alors un message de réponse. Le document WO 98132237 divulgue un tel procédé. L'interprétation des messages de réponse reçus permet, soit directement soit de manière itéractive, de déterminer le numéro d'identification de toutes les cartes présentes. Dans la suite, on parle de procédure d'identification pour désigner cet échange ou ces échanges de messages nécessaire(s) à l'identification des cartes présentes.

Les procédés connus diffèrent les uns des autres par le contenu du message de réponse d'une part, et par le séquencement des messages de réponse émis par les différentes cartes présentes d'autre part.

Afin d'éviter le problème de la collision possible entre les messages de réponse émis par au moins deux cartes présentes, on a déjà proposé des procédés dans lesquels les cartes répondent à un message d'interrogation par l'émission de leur numéro d'identification dans une fenêtre temporelle particulière au sein d'une séquence de n fenêtres temporelles (où n est un nombre entier supérieur ou égal à deux). A chaque carte est attribuée une unique fenêtre temporelle particulière, éventuellement de manière dynamique (c'est-à-dire en fonction du nombre de cartes effectivement présentes), afin qu'elle soit la seule à émettre un message de réponse à l'intérieur de cette fenêtre.

On connaît en outre un procédé d'identification consistant à reconstituer les numéros d'identification des cartes présentes par blocs de Q bits selon un algorithme itératif arborescent, dans lequel le message de réponse émis par les cartes présentes et autorisées à répondre comprend au moins un bit de service émis dans une fenêtre temporelle étroite, dont le positionnement dans une séquence de 2^{Q} fenêtres identiques successives indique la valeur d'un bloc de bits encore non identifié de son numéro d'identification. Ce procédé est décrit dans la demande de brevet français n° 98 01309 de la société SGS-THOMSON MICROELECTRONICS S.A.. Il donne de bons résultats mais peut encore être amélioré.

On voit que, selon une caractéristique commune aux procédés du type ci-dessus, les cartes électroniques répondent par l'émission d'un message de réponse, de quelque nature que ce soit, dans une fenêtre temporelle particulière au sein d'une séquence de fenêtres temporelles. Compte tenu des contraintes de synchronisation entre l'unité d'interrogation et les cartes qui lui répondent, la largeur d'une fenêtre temporelle est en pratique à peu près cent fois plus grande que la durée de transmission d'un message de réponse. Le procédé décrit dans la demande de brevet mentionnée plus haut est déjà satisfaisant dans la mesure où il permet d'avoir des fenêtres temporelles plus étroites. Il n'en demeure pas moins que les séquences de fenêtres temporelles occupent un temps global relativement long.

Or, pendant ce temps, l'unité d'interrogation est en attente des messages de réponse et ne peut dialoguer avec aucune carte, même déjà identifiée, puisque le canal est en quelque sorte réservé pour l'émission des messages de réponse par les cartes.

La présente invention a pour but de proposer des moyens pour pallier cet inconvénient des procédés d'identification de ce type.

A cet effet, l'invention propose un procédé d'identification du type ci-dessus, dans lequel l'unité d'identification émet, après le message d'interrogation, des marqueurs d'au moins deux types différents qui sont reçus et interprétés par les cartes, des marqueurs d'un premier type déterminant le début des fenêtres temporelles dans la séquence, et des marqueurs d'un second type provoquant le passage des cartes dans un état déterminé.

La valeur des mots de code reçus est interprétée par les cartes. Ainsi, il est possible d'interrompre la procédure d'identification des cartes présentes par l'émission d'un marqueur d'un type déterminé. Les cartes se placent alors dans un état déterminé qui permet à l'unité d'interrogation de reprendre l'initiative. Par exemple, les cartes se placent dans l'état de sommeil à réception d'un tel marqueur. L'unité peut alors envoyer un message de réveil puis un message de commande à destination d'une carte particulière déjà identifiée. Eventuellement, elle peut ensuite relancer une procédure d'identification, pour identifier d'autres cartes présentes, après l'exécution de cette commande.

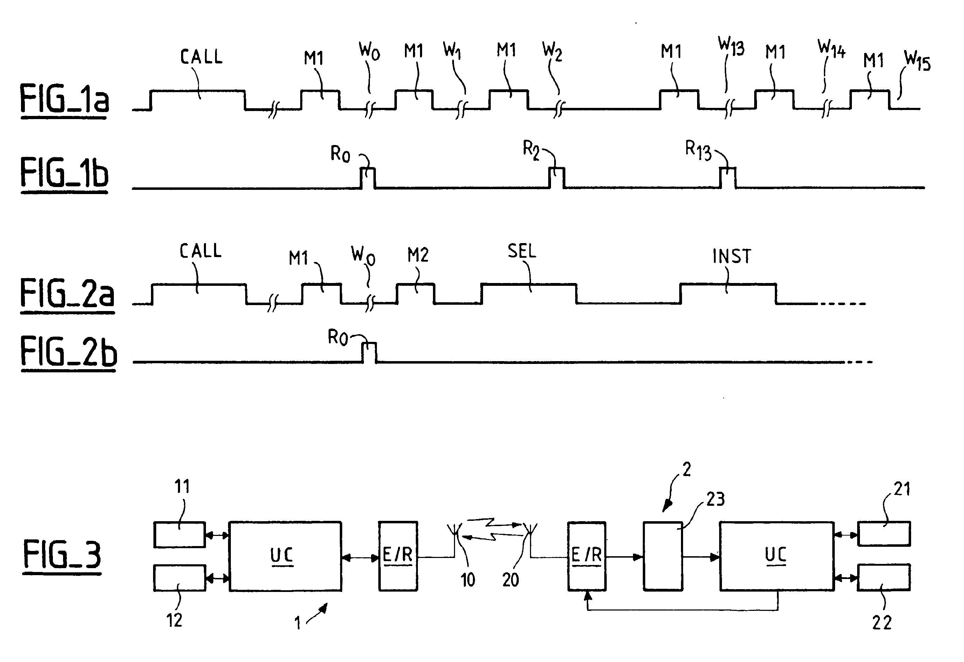

D'autres caractéristiques et avantages de l'invention apparaîtront plus clairement à la lecture de la description détaillée qui va suivre. Celle-ci est purement illustrative et doit être lue en regard des dessins annexés, sur lesquels on a représenté :
- aux figures 1a et 1b : des chronogrammes de signaux échangés entre l'unité d'interrogation et trois cartes dans le cas d'une exécution complète de la procédure d'identification des cartes présentes ;
- aux figures 2a et 2b : des chronogrammes de signaux échangés dans le cas d'une exécution interrompue de la procédure d'identification des cartes présentes ; et
- à la figure 3 : le schéma d'un système pour la mise en oeuvre du procédé selon l'invention.

L'invention est décrite ci-dessous dans le cadre non limitatif d'un exemple de méthode d'identification de cartes électroniques du type ci-dessus défini, qui est particulièrement simple. A cet effet, on considère que les cartes électroniques possèdent un numéro d'identification codé sur quatre bits. On peut donc avoir au maximum seize cartes présentes dans la zone d'investigation. Dans cet exemple, le numéro d'identification d'une carte est compris entre 0 et 15 (en notation décimale). Ce numéro est stocké dans une mémoire des cartes. Le principe de la méthode d'identification selon cet exemple est tout d'abord décrit en référence aux figures 1a et 1b, dans le cas où la procédure d'identification des cartes présentes est menée à son terme par l'unité d'interrogation.

A la figure la, on a représenté le chronogramme des signaux émis par l'unité d'interrogation au cours d'une procédure d'identification, alors que, à la figure 1b, on a représenté le chronogramme des signaux émis en réponse par les cartes présentes.

L'unité d'interrogation émet tout d'abord un message d'interrogation CALL. Ce message est reçu par toutes les cartes présentes dans la zone d'investigation et a pour effet de les réveiller, en sorte qu'elles se placent dans un état de veille. Dans cet état, elles scrutent le canal de transmission pour détecter les marqueurs émis par l'unité d'interrogation après le message CALL.

A la figure la, l'unité émet consécutivement seize marqueurs M1 d'un premier type. Un marqueur est, par exemple un mot binaire codé sur p bits, de manière à pouvoir être reçu et décodé par les moyens de réception présents dans les cartes électroniques. Par exemple, on choisira p=3. Un marqueur tel que les marqueurs M1 a alors, par exemple, la valeur 010 (en notation binaire). Néanmoins, un marqueur peut tout aussi bien être une forme d'onde de type particulier, par exemple une impulsion de tension dont le type au sens de la présente invention est défini par le signe soit positif soit négatif de cette tension.

La fonction des marqueurs M1 est d'indiquer le début de fenêtres temporelles à l'intérieur desquelles l'unité d'interrogation attend des messages de réponse éventuels. Ainsi, la suite des seize marqueurs M1 émis par l'unité d'interrogation détermine une séquence de fenêtres temporelles consécutives notées W0, W1, W2, ..., W13, W14 et W15 (figure 1a).

De préférence, les marqueurs M1 sont émis périodiquement, en sorte que les fenêtres temporelles sont de même largeur. Ceci n'est pas obligatoire mais est plus simple à mettre en oeuvre. En pratique, on cherche à créer des fenêtres temporelles dont la largeur est la plus petite possible compte tenu des contraintes liées à la synchronisation des moyens d'émission et de réception de l'unité d'interrogation et des cartes. On minimise ainsi la durée de la procédure d'identification.

Les marqueurs sont reçus et décodés par les cartes électroniques présentes. A la réception de chaque marqueur M1, un compteur interne des cartes est incrémenté d'une unité (ce compteur ayant été initialisé à zéro à la réception du message CALL). La valeur de ce compteur est comparée en permanence à la valeur du numéro d'identification de la carte. En cas d'égalité, la carte émet un message de réponse à l'intérieur d'une fenêtre temporelle comprise dans celle des fenêtres W0 et W15 dont le début est repéré dans le temps par le dernier marqueur M1 reçu.

Dans un exemple particulièrement simple, le message de réponse comprend un unique bit de valeur 1.

A la figure 1b, on a représenté les messages de réponse R0, R2 et R13 émis par trois cartes électroniques présentes, dont les numéros d'identification sont respectivement 0, 2, et 13 (en notation décimale). Comme on peut le voir, ces messages de réponse se trouvent à l'intérieur des fenêtres temporelles respectivement W0, W2 et W13.

En référence maintenant aux figures 2a et 2b, on va décrire les chronogrammes de signaux échangés dans le cas où la procédure d'identification n'est pas menée à son terme, c'est-à-dire quand elle est interrompue avant la fin de la séquence des seize fenêtres temporelles. Ce cas de figure peut se produire lorsque, dans une application particulière, l'unité maître a besoin d'engager rapidement une transaction avec une carte électronique qu'elle vient d'identifier.

On considère que les mêmes trois cartes électroniques que dans le cas précédent se trouvent dans la zone d'investigation. Tout se déroule comme dans le cas précédent jusqu'à l'émission du message de réponse R0 par la carte dont le numéro d'identification est égal à zéro. A réception de ce message de réponse, l'unité d'interrogation émet un marqueur M2 de même nature que le marqueur M1, mais d'un second type, différent de celui du marqueur M1. Dans l'exemple, ce marqueur est donc également un mot binaire codé sur trois bits mais a une valeur différente de celle des marqueurs M1. Il vaut par exemple 011 en notation binaire.

La fonction du marqueur M2 est de provoquer le passage des cartes dans un état déterminé, par exemple l'état de sommeil. Accessoirement la réception d'un marqueur M2 provoque l'interruption de la procédure d'identification.

Afin d'engager une transaction avec une carte électronique (par exemple celle dont le numéro d'identification est zéro et qui vient d'être identifiée, ou bien une autre qui avait déjà été identifiée lors d'une procédure d'identification antérieure), l'unité maître émet un message de réveil SEL, qui réveille cette carte. Le message SEL permet donc de sélectionner une carte déterminée. A cet effet, il comporte, en paramètre, le numéro d'identification de cette carte. Les autres cartes présentes restent bien entendu dans l'état de sommeil. L'unité maître émet alors un ou plusieurs messages de commande tels que le message INST visible à la figure 2b, pour effectuer la transaction.

Ainsi, les marqueurs émis par l'unité maître après le message d'interrogation ont deux fonctions distinctes selon leur valeur. Grâce à cela, il est possible d'interrompre la procédure d'identification avant la fin de la séquence des fenêtres temporelles W0 à W5, par exemple pour effectuer une transaction prioritaire avec une des cartes déjà identifiées.

On notera que, dans l'exemple décrit en regard des figures 2a et 2b, la procédure est interrompue à la réception du premier message de réponse R émis par une carte présente. Cependant, elle peut être interrompue de la même manière à n'importe quel autre moment. Le moment de cette interruption n'est par forcément lié aux messages de réponse émis par les cartes présentes. En effet, une interruption de la procédure d'identification peut être provoquée par l'unité maître pour quelque raison que ce soit.

Par ailleurs, le nombre de valeurs possibles des marqueurs n'est pas limité à deux. Dans l'exemple ci-dessus, il peut être au maximum égal à huit. Dans la pratique, il sera adapté au nombre de fonctions différentes attribuées aux marqueurs selon leur type ou valeur.

En outre, l'invention est applicable à tout type de procédé d'identification dans lequel les cartes électroniques répondent à un message d'interrogation par l'émission d'un message de réponse dans une fenêtre temporelle particulière au sein d'une séquence de fenêtres temporelles. Il ne se limite pas à l'exemple très simple d'un tel procédé décrit ci-dessus.

A la figure 3, on a représenté le schéma simplifié d'un système pour la mise en oeuvre d'un procédé selon l'invention. Une unité d'interrogation ou unité maître 1 comporte une unité de commande UC tel qu'un microprocesseur. Dans une mémoire de programme 11, cette unité UC comporte un programme pour gérer l'application propre au système, et également un programme pour la mise en oeuvre de la procédure d'identification. Dans une mémoire de données 12, elle peut mémoriser les numéros d'identification des cartes qu'elle a identifiées. L'unité 1 comporte en outre des moyens d'émission E/R couplés à une antenne 10, pour émettre ou recevoir des messages gérés par l'unité de commande.

Une carte 2 comporte également une unité de commande UC, qui en général est seulement capable d'effectuer un petit nombre d'opérations simples telles que la lecture et/ou l'écriture dans une mémoire. La carte comporte en outre des moyens d'émission/réception E/R couplés d'une part à une antenne 20 et d'autre part à l'unité de commande UC à travers un module d'interprétation 23.

La fonction du module 23 est d'interpréter les informations reçues par la carte pour déterminer s'il s'agit d'un message de réveil, d'un message de commande ou d'un marqueur, et dans ce dernier cas, de déterminer quel est le type ou la valeur de ce marqueur, afin d'activer des entrées correspondantes de l'unité UC en conséquence.

L'unité UC de la carte 2 est en outre couplée à une mémoire 21 pour mémoriser le numéro d'identification de la carte, et un compteur 22 dont la fonction déjà été indiquée plus haut.

Enfin, elle est également directement couplée aux moyens E/R de la carte pour l'émission des messages de réponse.

## Revendications

1. Procédé d'identification de cartes électroniques dans lequel les cartes électroniques répondent à un message d'interrogation (CALL) émis par une unité d'interrogation par l'émission d'un message de réponse (R0) dans une fenêtre temporelle particulière au sein d'une séquence de fenêtres temporelles (W0),
**caractérisé en ce que** l'unité d'interrogation émet, après le message d'interrogation (CALL), des marqueurs (M1,M2) d'au moins deux types différents qui sont reçus et interprétés par les cartes, des marqueurs (M1) d'un premier type déterminant le début des fenêtres temporelles dans la séquence, et des marqueurs (M2) d'un second type provoquant le passage des cartes dans un état déterminé.

2. Procédé selon la revendication 1 **caractérisé en ce que**, à réception d'un marqueur (M2) du second type, la procédure d'identification est interrompue.

3. Procédé selon la revendication 1 ou 2, **caractérisé en ce que**, à réception d'un marqueur (M2) du second type, certaines au moins des cartes se placent dans un état de sommeil.

4. Procédé selon l'une des revendications 1 à 3, **caractérisé en ce que** les marqueurs sont des mots binaires codés sur p bits, avec p supérieur ou égal à l'unité, en sorte qu'ils ont au moins deux valeurs différentes possibles.

5. Système pour la mise en oeuvre d'un procédé selon l'une des revendications précédentes **caractérisé en ce qu'**il comporte une unité d'interrogation et des cartes qui comprennent des moyens (23) pour interpréter les informations reçues et déterminer le type ou la valeur du marqueur reçu.

## Claims

1. Method of identifying electronic cards in which said electronic cards respond to an interrogation message (CALL), sent by an interrogation unit, by sending a response message (R0) in a specific time slot within a sequence of time slots (W0), **characterised in that** the interrogation unit sends, after the interrogation message (CALL), markers (M1, M2) of at least two different types which are received and interpreted by the cards, markers (M1) of a first type determining the start of the time slots in the sequence, and markers (M2) of a second type causing the passage of the cards to a predetermined state.

2. Method according to claim 1, **characterised in that**, upon reception of a marker (M2) of the second type, the identification procedure is interrupted.

3. Method according to claims 1 or 2, **characterised in that**, upon reception of a marker (M2) of the second type, at least some of the cards set themselves to a standby state.

4. Method according to any one of claims 1 to 3, **characterised in that** the markers are binary words encoded on p bits, where p is greater than or equal to 1, whereby they have at least two different possible values.

5. System for implementing a method according to any one of the preceding claims, **characterised in that** it comprises an interrogation unit and cards which comprise means (23) for interpreting the information received and for determining the type or the value of the marker received.

## Patentansprüche

1. Identifikationsverfahren mittels elektronischer Karten, in welchem die elektronischen Karten auf eine Abfragemeldung (CALL), die durch eine Abfrageeinheit gesendet wurde, durch Sendung einer Antwortmeldung (R0) in einem speziellen Zeitfenster innerhalb einer Zeitfensterfolge (WO) reagieren,
**dadurch gekennzeichnet, dass** die Abfrageeinheit nach der Abfragemeldung (CALL) Marker (M1, M2) von wenigstens zwei unterschiedlichen Typen sendet, die durch die Karten empfangen und interpretiert werden, wobei die Marker (M1) eines ersten Typs den Anfang des Zeitfensters in der Folge bestimmen und die Marker (M2) eines zweiten Typs den Übergang der Karten in einen bestimmten Zustand auslösen.

2. Verfahren nach Anspruch 1, **dadurch gekennzeichnet, dass** beim Empfang eines Markers (M2) des zweiten Typs das Identifikationsverfahren unterbrochen wird.

3. Verfahren nach Anspruch 1 oder 2, **dadurch gekennzeichnet, dass** sich beim Empfang eines Markers (M2) des zweiten Typs wenigstens einige der Karten in einen Ruhezustand versetzen.

4. Verfahren nach einem der Ansprüche 1 bis 3, **dadurch gekennzeichnet, dass** die Marker auf p Bits kodierte binäre Wörter sind, wobei p größer oder gleich der Einheit sind, derart, dass sie wenigstens zwei mögliche unterschiedliche Werte haben.

5. System zur Durchführung eines Verfahrens nach einem der vorstehenden Ansprüche, **dadurch gekennzeichnet, dass** dieses eine Abfrageeinheit und Karten umfasst, die Einrichtungen (23) aufweisen, um die empfangenen Informationen zu interpretieren und den Typ oder den Wert des empfangenen Markers zu bestimmen.
